# EUROPÄISCHE PATENTSCHRIFT

(11) **EP 3 425 251 B1**
(45) Veröffentlichungstag und Bekanntmachung des Hinweises auf die Patenterteilung: **14.08.2019**
(21) Anmeldenummer: 18181395.7
(22) Anmeldetag: 03.07.2018
(51) Int. Cl.: F16L 23/14, F24F 13/02, F16L 23/032, F16L 23/22

(54) **LUFTKANALVERBINDUNGSSYSTEM**
AIR DUCT CONNECTION SYSTEM
SYSTÈME DE RACCORDEMENT DE CANAUX D'AIR

(30) Priorität: 03.07.2017 DE 102017114780
(43) Veröffentlichungstag der Anmeldung: 09.01.2019
(73) Patentinhaber: Mez, Jörg-Peter, 72770 Reutlingen (DE)
(72) Erfinder: Mez, Jörg-Peter, 72770 Reutlingen (DE)
(74) Vertreter: Mammel und Maser

(56) Entgegenhaltungen:
- EP-A1- 2 441 998
- WO-A1-00/57094
- DD-A1- 105 496
- DE-U1-202007 007 165
- DE-U1-202015 009 334
- US-A- 4 252 350

## Beschreibung

Die Erfindung betrifft ein Luftkanalverbindungssystem mit einem Flanschprofil und einem Dichtprofil zum Verbinden von Luftkanalelementen.

Aus der DE 200 12 782 U1 ist ein Flanschprofil zum Verbinden von Luftkanalelementen mit einer auf das Ende des Luftkanalelementes aufschiebbaren, von Profilschenkeln gebildeten ersten Kammer und einer durch weitere Profilschenkel gebildeten zweiten Kammer, die winklig zur ersten Kammer angeordnet ist, bekannt. Die zweite Kammer dient zur Aufnahme eines Schenkels eines Eckwinkels, um zwei benachbarte Flanschprofile miteinander zu verbinden. Bei diesem Flanschprofil ist ein erster Schenkel der ersten Kammer und ein daran angrenzender erster Schenkel der zweiten Kammer L-förmig ausgebildet, wobei der erste Schenkel der zweiten Kammer eine Rückfalznase aufweist, die im wesentlichen parallel zum ersten Schenkel der ersten Kammer ausgerichtet ist. Dadurch kann die erste Kammer von der zweiten Kammer getrennt sein. Zudem ist im Bereich der Rückfalznase und dem ersten Schenkel der ersten Kammer eine Einstecktasche für das Ende des Luftkanalelementes gebildet. Ein ähnliches Flanschprofil ist aus der US 5,103,872 A bekannt.

Aus der EP 2 063 195 A1 ist des Weiteren ein Flanschprofil bekannt, welches eine erste Kammer und zweite Kammer umfasst, welche L-förmig ausgebildet sind. Im Übergangsbereich zwischen der ersten und der zweiten Kammer ist ebenfalls eine Rückfalznase vorgesehen und eine Einstecktasche gebildet. In dieser Einstecktasche ist eine Wulst oder eine Raupe aus einem Butyl-Kleb-/Dicht-/und -Dämmstoff eingebracht. Nach dem Einbringen von einem Ende eines Luftkanalelementes kann dadurch eine Dichtwirkung im Inneren des Flanschprofils zwischen dem Luftkanalelement und dem Flanschprofil erfolgen.

Aus der DE 20 2015 009 334 U1 ist ein Flanschprofil bekannt, an welchem ein Flanschelement befestigbar ist, um eine Dämmschicht zu fixieren, welche das Flanschprofil umgibt.

Beim Verbinden von zwei Luftkanalelementen zu einem Luftkanal werden die Flanschprofile, die mit einer Außenseite der zweiten Kammer aufeinander zuweisen, zusammengeführt. Zur abdichtenden Anordnung wird an einen der beiden Außenseiten der zweiten Kammer ein Dichtband aufgeklebt. Dies ist aus der DE 20 2014 009 884 U1 bekannt. Diese Montage ist aufwändig. Zudem ist eine vollständige Abdichtung erschwert.

Aus der DE 20 2007 007 165 U1 ist ein kaltgewalztes Flanschprofil aus Blech zum Verbinden von Luftkanalelementen bekannt. Das gewalzte Flanschprofil weist eine mit einer auf das Ende des Luftkanalelementes aufsschiebbare erste Kammer und eine von dieser luftdicht abgetrennten, winklig zu dieser angeordneten zweite Kammer auf, wobei das Außen- und Innenblech zwischen den beiden Luftkammern übereinandergefaltet sind und die vier Schichten des Falzes miteinander verpresst sind.

Aus der DE 20 2015 009 334 U1 ist des Weiteren ein Luftkanalelement bekannt, in welchem Flansche an den Stirnseiten des Außengehäuses angeordnet sind. Das Luftkanalelement weist des Weiteren eine Dämmschicht auf, die werkseitig montiert auf der Innenseite des Außengehäuses angeordnet ist. Neben einer ersten Dämmschicht ist wenigstens eine zweite Dämmschicht werkseitig montiert, insbesondere mittels eines auf silanterminierten Polymeren basierten Klebstoffs verklebt.

Aus der DD 105 496 A1 ist eine Dichtung für Flanschanschlüsse an emaillierten Polymerisationskesseln bekannt. Diese Dichtung weist an dem dem Druckraum zugeordneten Umfeld eine ringförmige Lippe auf, wobei der Übergang zur Lippe den gleichen Radius wie der emaillierte Flansch an dieser Stelle besitzt.

Der Erfindung liegt die Aufgabe zugrunde, ein Luftkanalverbindungssystem mit einem Flanschprofil und einem Dichtprofil vorzuschlagen, welches eine schnelle und einfache sowie gleichzeitig abdichtende Montage von zwei zu verbindenden Luftkanalelementen ermöglicht.

Die der Erfindung zugrundeliegende Aufgabe wird durch ein Luftkanalverbindungssystem zum Verbinden von zwei Luftkanalelementen zur Bildung eines Luftkanales gelöst, bei welchem Flanschprofile vorgesehen sind, welche auf ein Ende des Luftkanalelementes aufschiebbar sind und bei dem ein Eckwinkel in die zweite Kammer von zwei zueinander benachbarten Flanschprofilen eingesteckt ist und darauffolgend das Dichtprofil an den Flanschprofilen aufsteckbar ist, welches sich sowohl entlang den Flanschprofilen als auch den Eckbereichen erstreckt und die stirnseitige Anschlussstelle zwischen zwei Luftkanalelementen abdichtet. Ein solches Luftkanalverbindungssystem weist den Vorteil auf, dass eine schnelle Endmontage ermöglicht ist, bei der eine sichere Abdichtung zwischen den beiden zu verbindenden Luftkanalelementen gewährleistet ist.

Bei dem Flanschprofil zum Verbinden von Luftkanalelementen umfasst der erste Profilschenkel der ersten Kammer eine Rückkröpfung, die sich außerhalb der ersten Kammer erstreckt und sich eine Einsteckkammer an die Rückkröpfung anschließt, welche benachbart und außerhalb der ersten Kammer vorgesehen ist und eine Falzung der Rückfalznase sich bis zum Übergangsabschnitt zwischen dem zweiten Profilschenkel der zweiten Kammer und dem zweiten Profilschenkel der ersten Kammer erstreckt. Dieses Flanschprofil weist den Vorteil auf, dass in entgegengesetzter Richtung, in welche das Luftkanalelement mit dessen Ende auf das Flanschprofil aufgesetzt wird, ein Profilabschnitt am Dichtungsprofil in der Einsteckkammer befestigbar ist, so dass sich dieses Dichtungsprofil zwischen zwei aneinandergrenzenden Außenseiten der zweiten Kammern der Flanschprofile erstreckt und eine dichte Verbindung zwischen zwei miteinander zu verbindenden Luftkanalelementen bilden kann. Durch diese Einsteckkammer kann die Montage eines Dichtelementes vereinfacht werden, da lediglich ein Einstecken erforderlich ist und dadurch eine selbsthaltende Positionierung des Dichtelementes gegeben ist. Dadurch wird die Montage vereinfacht. Auch ein Abziehen eines Silikonpapieres, welches auf der Klebebeschichtung des Dichtbandes vorgesehen war, kann entfallen. Gleichzeitig kann beim Aufstecken des Flanschprofils auf das Luftkanalelement eine Abdichtung durch den in der Einstecktasche anordenbaren Dichtstoff erzielt werden.

Bevorzugt ist vorgesehen, dass die Einsteckkammer benachbart zur Einstecktasche ausgebildet ist. Dadurch kann die bisherige Anschlussstelle des Flanschprofiles im Bereich der zweiten Kammer aufrechterhalten bleiben, jedoch eine einfache Montage des Dichtelementes vorgesehen sein.

Des Weiteren ist bevorzugt vorgesehen, dass die Einsteckkammer der Rückkröpfung gegenüberliegend eine Einstecköffnung aufweist, die durch einen V-förmig in die Einsteckkammer weisenden Schenkel gebildet ist, der zu einer Außenseite des ersten Profilschenkels der ersten Kammer beabstandet ist. Dadurch ist eine einfache Herstellung des Flanschprofils durch Falzen ermöglicht, so dass das Flanschprofil aus einem streifenförmigen Material, insbesondere Blech, durch mehrere Falzschritte hergestellt werden kann.

Die Einstecköffnung der Einsteckkammer verengt sich in Richtung auf die Rückkröpfung. Dadurch kann durch den V-förmigen Schenkel eine Hinterschneidung gebildet werden, um eine einfache Montage eines Dichtprofils zu ermöglichen.

In der Einstecktasche des Flanschprofils ist bevorzugt ein Klebe-Dichtstoff eingebracht. Dieser Klebe-Dichtstoff ist vorteilhafterweise als ein- oder zweikomponentiger Kunststoff ausgebildet. Dadurch erfolgt nach dem Aufstecken des einen Endes des Luftkanalelementes in die erste Kammer des Flanschprofils eine chemische und/oder mechanische Reaktion zwischen dem Klebe-Dichtstoff und dem Ende des Luftkanalelementes, wodurch eine dichte und feste Verbindung zwischen dem Luftkanalelement und dem Flanschprofil erzeugt wird. Eine zusätzliche Befestigung des Endes des Luftkanalelementes in der ersten Kammer des Flanschprofils, beispielsweise durch Schrauben, Nieten, Clinch- und/oder Punktschweißen, kann entfallen.

Das Dichtprofil zum Verbinden von Luftkanalelementen für ein Luftkanalverbindungssystem umfasst einen Dichtprofilkörper, der L-förmig ausgebildet ist und an dem Flanschprofil befestigbar ist. Dieser Dichtprofilkörper weist einen ersten streifenförmigen Abschnitt mit einer Anlagefläche zur Anlage einer Außenseite des ersten Schenkels der zweiten Kammer auf. An diesen ersten streifenförmigen Abschnitt schließt sich ein zweiter Profilabschnitt an, der in die Einsteckkammer des Flanschprofils einsteckbar ist. Dies ermöglicht sowohl eine abdichtende Anlage von zwei benachbarten zweiten Kammern von Flanschprofilen bei der Herstellung einer Luftkanalverbindung. Darüber hinaus sind auch die Eckbereiche abgedichtet, da sich das Dichtprofil von dem ersten streifenförmigen Abschnitt durchgehend in den Profilabschnitt erstreckt und insbesondere umlaufend zum Anschlussquerschnitt des Luftkanalelementes ausgebildet ist. Ein solches Dichtprofil ist in einfacher Weise an dem Flanschprofil gemäß einer der vorbeschriebenen Ausführungsformen aufsteckbar oder einsetzbar und ermöglicht eine einfache Montage sowie eine vollständige Abdichtung der Anschlussschnittstelle zwischen zwei Luftkanalelementen.

Das Dichtprofil weist vorteilhafterweise am ersten Profilabschnitt eine Rastnase oder eine Hinterschneidung auf, welche an den V-förmigen Schenkel der Einsteckkammer angreift oder diese hintergreift.

Der erste streifenförmige Abschnitt des Dichtprofils kann als Hohlkörper, als Profilkörper oder auch als Vollkörper, insbesondere als quadratisch- oder rechteckförmiger Vollkörper, ausgebildet sein.

Des Weiteren kann bevorzugt vorgesehen sein, dass die Anlagefläche des streifenförmigen Abschnitts des Dichtprofils eine Klebstoffbeschichtung aufweist, so dass diese zusätzlich an einer Außenseite der zweiten Kammer des Flanschprofils befestigbar ist.

Bevorzugt ist das Dichtprofil als endloses Band ausgebildet. Dieses endlose Band kann beispielsweise auf einer Rolle oder als Wickel bevorratet bereitgestellt werden. Dieses Dichtprofil kann entsprechend des Querschnitts des Luftkanalelementes in der Länge abgeschnitten und anschließend an dem Flanschprofil aufgesteckt, eingesetzt oder befestigt werden. Bevorzugt sind die beiden einander zugeordneten Enden des Dichtprofils überlappend zu dem Flanschprofil angeordnet, sodass ein umlaufendes geschlossenes Dichtprofil gebildet ist. Ein solches Dichtprofil kann bevorzugt durch Extrusion kostengünstig herstellbar sein.

Das im Querschnitt vorzugsweise L-förmige Dichtprofil ist bevorzugt als eine geschlossene umlaufende Dichtung ausgebildet, welche auf einen Anschlussquerschnitt von zwei miteinander zu verbindenden Luftkanalelementen angepasst ist. Dadurch ist ein einfaches Aufstecken und Fixieren des Dichtprofils an einer Anschlussschnittstelle eines Luftkanalelementes ermöglicht. Dabei greift der Profilabschnitt bei einem quadratisch- oder rechteckförmigen Luftkanalelementes in vier daran angeordnete Flanschprofile beziehungsweise deren Einsteckkammern ein.

Das Dichtprofil kann an den jeweiligen Anwendungsfall angepasst sein. Beispielsweise kann das Dichtprofil aus EPDM, PE, PVC, Kautschuk oder auch aus Neopren oder aus einer Kombination von zwei voneinander abweichenden thermoplastischen Elastomeren ausgebildet sein. Eine erste Komponente, welche den einsteckbaren Profilabschnitt bildet, ist bevorzugt steifer als eine zweite Komponente, welche die Anlagefläche bildet. Vorteilhafterweise ist dieses Dichtprofil durch Spritzgießen hergestellt. Zusätzlich kann dieses Dichtprofil auch noch ergänzende Beschichtungen aufweisen, um beispielsweise gegen aggressive Medien widerstandsfähig zu sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht eines Luftkanalelementes mit daran angeordneten Flanschprofilen,
Figur 2 eine schematische Stirnansicht auf ein erfindungsgemäßes Flanschprofil,
Figur 3a eine schematische Schnittansicht durch zwei benachbart zueinander angeordnete Flanschprofile mit Wandabschnitten der Luftkanalelemente gemäß einer ersten Ausführungsform,
Figur 3b eine schematische Schnittansicht durch zwei benachbart zueinander angeordnete Flanschprofile mit Wandabschnitten der Luftkanalelemente gemäß einer weiteren alternativen Ausführungsform,
Figur 4 eine schematische Ansicht auf ein Dichtprofil für das Flanschprofil gemäß Figur 2 und
Figur 5 eine vergrößerte und perspektivische Ansicht eines Eckbereichs des Dichtprofils gemäß Figur 4.

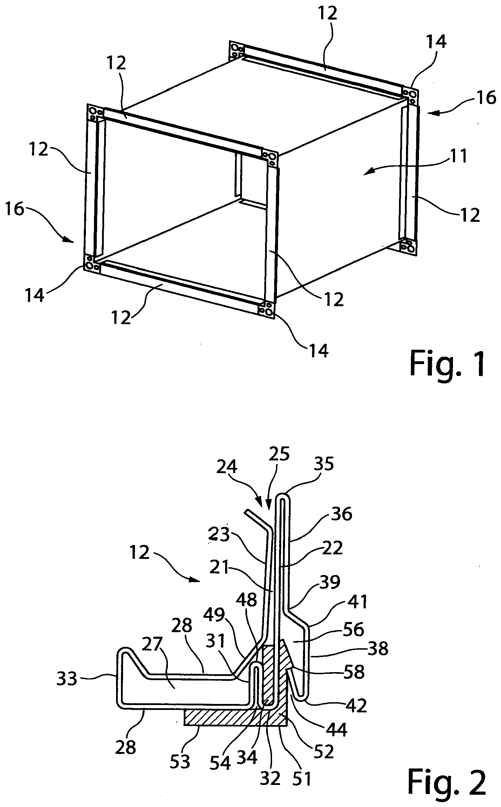

In Figur 1 ist eine perspektivische Ansicht eines Luftkanalelementes 11 dargestellt. Dieses Luftkanalelement 11 weist geradeflächige Wände mit einem beispielsweise rechteckförmigen Querschnitt zur Bildung eines Kanals auf. Alternativ können auch quadratische oder sonstige Querschnitte vorgesehen sein. An einem vorderen und hinteren Ende des Luftkanalelementes 11 sind jeweils Flanschprofile 12 aufgeschoben, welche in den nachfolgenden Figuren näher erörtert werden. Im Eckbereich zwischen zwei benachbarten Flanschprofilen 12 ist ein Eckwinkel 14 vorgesehen, der die zwei zueinander benachbarten Flanschprofile 12 miteinander verbindet. Durch die auf ein stirnseitiges Ende des Luftkanalelementes 11 aufgeschobenen Flanschprofile 12 ist eine Anschlussstelle 16 geschaffen, welche die Verbindung von zwei Luftkanalelementen 11 ermöglicht, um einen längeren Luftkanal herzustellen.

Dabei werden beispielsweise die Eckwinkel 14 von zwei einander gegenüberliegenden Luftkanalelementen 11 durch eine Schraubverbindung oder eine Spannverbindung oder dergleichen befestigt und ausgerichtet.

In Figur 2 ist ein erfindungsgemäßes Flanschprofil 12 dargestellt. Dieses Flanschprofil 12 besteht bevorzugt aus einem gewalzten, insbesondere kalt gewalzten, Blech. Dabei wird ein streifenförmiges Blech mehrmals gekantet, gefalzt und/oder gebogen, so dass aus einem streifenförmigen Material des Bleches das Flanschprofil 12 gebildet ist.

Das Flanschprofil 12 umfasst eine erste Kammer 21 mit einem ersten Profilschenkel 22 und diesem gegenüberliegend einem zweiten Profilschenkel 23. Der erste und zweite Profilschenkel 22, 23 weisen ein offenes Ende 24 auf, über welches ein Ende des Luftkanalelementes in die erste Kammer 21 gemäß Pfeil 25 eingeschoben werden kann. Im wesentlichen L-förmig zur ersten Kammer 21 ist eine zweite Kammer 27 vorgesehen, welche aus einem ersten Profilschenkel 28 und einem zweiten Profilschenkel 29 gebildet ist, die zueinander beabstandet sind.

Der erste Profilschenkel 22 der ersten Kammer 21 und der erste Profilschenkel 28 der zweiten Kammer 27 sind im wesentlichen L-förmig zueinander ausgerichtet. Der erste Profilschenkel 28 der zweiten Kammer 27 umfasst eine Rückfalznase 31, welche parallel zum ersten Profilschenkel 22 der ersten Kammer 21 ausgerichtet ist. Eine Falzung 48 der Rückfalznase 31 erstreckt sich bis zum Übergangsabschnitt 49 zwischen dem zweiten Profilschenkel 29 der zweiten Kammer 27 und dem zweiten Profilschenkel 23 der ersten Kammer 21. Dadurch wird im Eckbereich zwischen dem ersten Profilschenkel 22 der ersten Kammer 21 und dem ersten Profilschenkel 28 der zweiten Kammer 27 eine Einstecktasche 32 gebildet. Diese Einstecktasche 32 ist Teil der ersten Kammer 21, insbesondere da die Falzung 48 an dem Übergangabschnitt 49 anliegt.

Die erste Kammer 21 und zweite Kammer 27 sind durch die Rückfalznase 31 getrennt. An einem der Rückfalznase 31 gegenüberliegenden Ende der zweiten Kammer 27 ist ein Wandabschnitt 33 gebildet. Somit kann durch den ersten und zweiten Profilschenkel 28, 29, dem Wandabschnitt 33 und der Rückfalznase 31 eine quasi geschlossene zweite Kammer 27 gebildet sein. In diese zweite Kammer 27 greift ein Schenkel eines Eckwinkels 14 bei einer Anordnung gemäß Figur 1 ein.

In die Einstecktasche 32 ist bevorzugt ein Kleb-/Dichtstoff 34 eingebracht. Dieser Kleb-/Dichtstoff 34 besteht aus einem ein- oder zweikomponentigen Kunststoff.

Der erste Profilschenkel 22 der ersten Kammer 21 umfasst im Bereich des offenen Endes 24 eine Rückkröpfung 35, an welche sich ein Schenkelabschnitt 36 anschließt, der sich zumindest abschnittsweise parallel zum ersten Profilschenkel 22 erstreckt und vorzugsweise an diesem anliegt. Daran anschließend ist eine Einsteckkammer 38 vorgesehen. Diese Einsteckkammer 38 ist durch eine zweifache Abkantung 39, 41 gebildet, die gegenläufig ausgerichtet ist. Am stirnseitigen Ende der Einsteckkammer 38 ist ein V-förmiger Schenkel 42 vorgesehen, der in einen Innenraum der Einsteckkammer 38 gerichtet ist. Durch diesen V-förmigen Schenkel 42, der beabstandet zum ersten Profilschenkel 22 der ersten Kammer 21 an dessen Außenseite vorgesehen ist, kann eine sich verengende Einstecköffnung 44 ausgebildet sein.

An dem Flanschprofil 12 ist ein Dichtprofil 51 befestigbar. Dieses Dichtprofil 51 kann insbesondere durch ein Aufstecken an dem Flanschprofil 12 daran befestigbar sein.

Das Dichtprofil 51 umfasst einen Dichtprofilkörper 52 mit einem streifenförmigen Abschnitt 53 und mit einer Anlagefläche 54, die zur Anlage an der zweiten Kammer 27 vorgesehen ist. Des Weiteren umfasst das Dichtprofil 51 einen Profilabschnitt 56, der mit dem streifenförmigen Abschnitt 53 verbunden ist. Dieser Profilabschnitt 56 ist in die Einsteckkammer 38 einsteckbar. Durch eine einfache Aufsteck- oder Einsteckbewegung kann das Dichtprofil 51 mittels Profilabschnitt 56 in der Einsteckkammer 38 selbsthaltend fixiert sein.

Der Profilabschnitt 56 des Dichtprofils 51 umfasst eine Rastnase 58, die nach dem Einsetzen des Profilabschnittes 56 in die Einsteckkammer 58 den V-förmigen Schenkel 42 hintergreift.

Der streifenförmige Abschnitt 53 und der Profilabschnitt 56 sind vorzugsweise L-förmig zueinander ausgerichtet. Der streifenförmige Abschnitt 53 kann beispielsweise als ein Hohlkörper, Profilkörper oder Vollkörper ausgebildet sein. Ergänzend kann der streifenförmige Abschnitt 53 an einer zur Anlagefläche 54 der zweiten Kammer 27 weisenden Seite eine Klebstoffbeschichtung aufweisen.

Zur Verbindung von zwei Luftkanalelementen 11 wird jedes der beiden Luftkanalelemente 11 mit Flanschprofilen 12 und Eckwinkel 14 versehen, so dass die Eckwinkel 14 zwei benachbarte Flanschprofile 12 miteinander verbinden, wie dies in Figur 1 dargestellt ist. Die Flanschprofile 12 und die Eckwinkel 14 bilden einen umlaufenden Rahmen, der an dem Luftkanalelement 11 angreift.

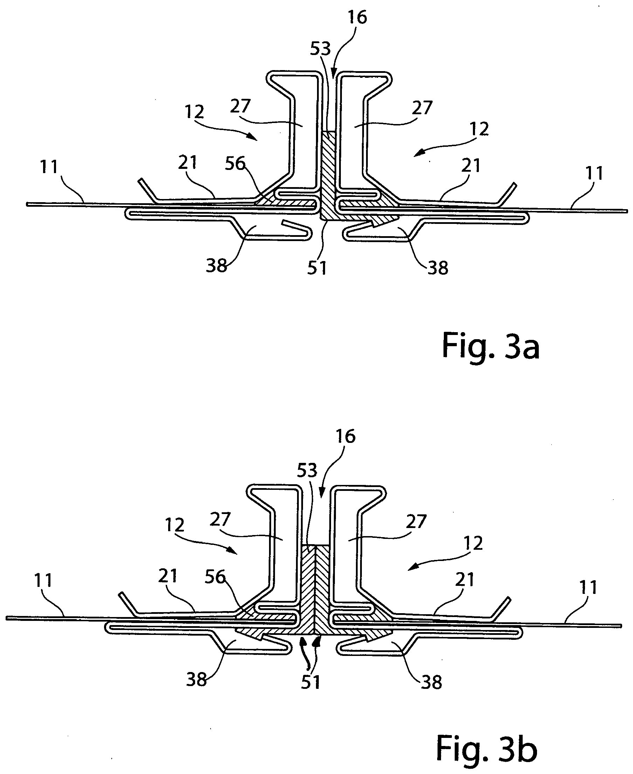

In Figur 3a ist eine schematische Schnittansicht durch zwei zueinander ausgerichtete Flanschprofile 12 dargestellt, durch welche zwei Luftkanalelemente 11 zu einem gemeinsamen Kanalabschnitt miteinander verbunden werden. Jeweils ein Wandabschnitt des Luftkanalelementes 11 ist in die erste Kammer 21 des Flanschprofils 12 eingeschoben. Dabei kommt der Wandabschnitt mit der Klebe-/Dichtmasse 34 in der Einstecktasche 32 in Verbindung und verdrängt diese auch teilweise. Durch die Kontaktierung des Wandelementes mit Klebe-/Dichtmasse 34 wird eine chemische und/oder mechanische Reaktion erzeugt. Das Ende der Wand des Luftkanalelementes 11 wird in der ersten Kammer 21 fixiert. Gleichzeitig findet auch eine Abdichtung der in der ersten Kammer 21 angeordneten Wand des Luftkanalelementes 11 zum Flanschprofil 12 statt. Auch kann eine Abdichtung im Bereich der Rückfalznase 31 zum gegenüberliegenden Wandabschnitt des Flanschprofils 12 erfolgen.

An einem der beiden Anschlussstellen 16 der Luftkanalelemente 11 ist das Dichtprofil 51 aufsetzbar. Daran anschließend werden die Luftkanalelemente 11 zueinander ausgerichtet. Das Dichtprofil 51 wird zwischen zwei ineinander gegenüberliegenden zweiten Kammern 27 der Flanschprofile 12 eingepresst und bildet eine Abdichtung. Da sich das Dichtprofil 51 über einen Eckbereich 62 des ersten Profilschenkels 22 der ersten Kammer 21 und des ersten Profilschenkels 28 der zweiten Kammer 27 erstreckt und das Dichtprofil 51 in den Eckbereichen der Wände des Luftkanalelementes 11 durchgehend und umlaufend ist, kann eine vollständige Abdichtung der Anschlussstelle 16 zwischen den beiden Luftkanalelementen 11 erzielt werden.

In Figur 3b ist eine alternative Ausführungsform zur Figur 3a dargestellt. Bei dieser Ausführungsform gemäß Figur 3b ist an jedem Flanschprofil 12 ein Dichtprofil 51 vorgesehen. Die jeweiligen streifenförmigen Abschnitte 53 des Dichtprofils 51 liegen zwischen den einander zugeordneten zweiten Kammern 27 der Flanschprofile 12 aneinander an und dichten diese Schnittstelle ab.

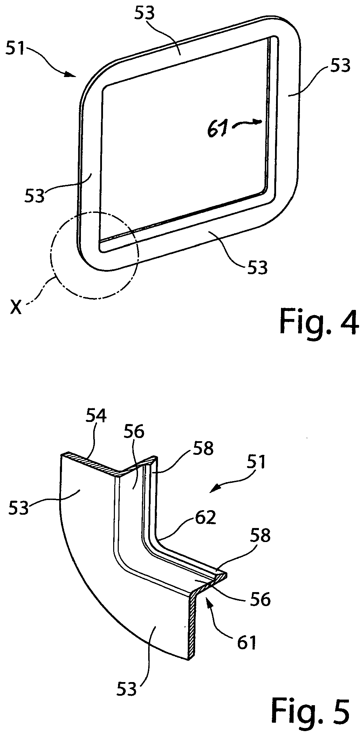

In Figur 4 ist eine schematische Stirnansicht auf das Dichtprofil 51 dargestellt. Das Dichtprofil 26 weist einen umlaufenden Rahmen 61 auf. Dieser wird durch den Profilabschnitt 56 gebildet. An diesen Profilabschnitt 61 schließen sich jeweils die streifenförmigen Abschnitte 53 an, welche im Eckbereich 62 ausgespart sind, da in diesem Bereich Befestigungselemente an den Eckwinkeln 14 angreifen.

In Figur 5 ist eine perspektivische Ansicht des Details X in Figur 4 dargestellt. Ein Eckbereich 62 des Dichtprofils 51 ist vergrößert dargestellt. Der Profilabschnitt 56 erstreckt sich entlang des Eckbereichs 62, so dass eine umlaufende Abdichtung gegeben ist. Im Bereich der Schnittstelle 16 sind die äußeren Wandabschnitte der Einstecktasche 32 einander gegenüberliegend ausgerichtet und liegen abdichtend an dem Dichtprofil 51, insbesondere dem streifenförmigen Abschnitt 53, an.

Das Dichtprofil 51, welches durch Aufsetzen und Einstecken in die Einsteckkammer 32 des Flanschprofils 12 befestigbar ist, weist den Vorteil auf, dass eine einfache Montage gegeben ist. Zudem ist ermöglicht, dass das Dichtprofil 51 mit dem Flanschprofil 12 fest, aber für mechanische Einwirkungen flexibel verbunden ist.

## Patentansprüche

1. Luftkanalverbindungssystem zum Verbinden von zwei Luftkanalelementen (11) zur Bildung eines Luftkanals, mit Flanschprofilen (12), welche eine auf das Ende des Luftkanalelementes (11) aufschiebbare, von Profilschenkeln (22, 23) gebildete erste Kammer (21) und eine durch weitere Profilschenkel (28, 29) gebildete zweite Kammer (27) umfasst, die winklig zur ersten Kammer (21) angeordnet ist und die zweite Kammer (27) zur Aufnahme eines Schenkels eines Eckwinkels (14) vorgesehen ist, wobei der erste Profilschenkel (22) der ersten Kammer (21) und der erste Profilschenkel (28) der zweiten Kammer (27) L-förmig ausgerichtet sind und der erste Profilschenkel (28) der zweiten Kammer (27) eine Rückfalznase (31) aufweist, die im wesentlichen parallel zum ersten Profilschenkel (22) der ersten Kammer (21) ausgerichtet ist und eine Einstecktasche (32) für das Ende des Luftkanalelementes (11) bildet und der erste Profilschenkel (22) der ersten Kammer (21) eine Rückkröpfung (35) umfasst, die sich außerhalb der ersten Kammer (21) erstreckt und eine Einsteckkammer (38) ausgebildet ist, welche benachbart und außerhalb der ersten Kammer (21) vorgesehen ist und an die Rückkröpfung (35) anschließt und dass eine Falzung (48) der Rückfalznase (31) sich bis zum Übergangsabschnitt (49) zwischen dem zweiten Profilschenkel (29) der zweiten Kammer (27) und dem zweiten Profilschenkel (23) der ersten Kammer (21) erstreckt, wobei im Eckbereich des Luftkanalelementes (11) zwei benachbarte Flanschprofile (12) durch einen Eckwinkel (14) miteinander verbunden sind und der jeweilige Schenkel des Eckwinkels (14) in die zweite Kammer (27) des Flanschprofils (12) eingesteckt ist und das Luftkanalelement (11) mit dem einen Ende in die Einstecktasche (32) des Flanschprofils (12) eingesteckt ist, **dadurch gekennzeichnet, dass** ein Dichtprofil (51) mit einem Dichtprofilkörper (52) im Querschnitt L-förmig ausgebildet ist, und einen streifenförmigen Abschnitt (53) mit einer Anlagefläche (54) für eine Außenseite des ersten Schenkels (28) der zweiten Kammer (27) eines Flanschprofils (12) aufweist und einen Profilabschnitt (56) umfasst, der in die Einsteckkammer (38) des Flanschprofils einsteckbar ist, und das Dichtprofil (51) an dem oder den Flanschprofilen (12) des Luftkanalelementes (11) aufsteckbar ist und sich entlang der Flanschprofile (12) und den Eckbereichen (62) erstreckt und eine stirnseitige Anschlussstelle (16) zwischen zwei Luftkanalelementen (11) abdichtet.

2. Luftkanalverbindungssystem nach Anspruch 1, **dadurch gekennzeichnet, dass** die Einsteckkammer (38) des Flanschprofils (12) benachbart und außerhalb der Einstecktasche (32) angeordnet ist.

3. Luftkanalverbindungssystem nach Anspruch 1 oder 2, **dadurch gekennzeichnet, dass** die Einsteckkammer (38) der Rückkröpfung (35) gegenüberliegend eine Einstecköffnung (44) aufweist, die durch einen V-förmigen Schenkel (42) gebildet ist, der in einen Innenraum der Einsteckkammer (38) weist.

4. Luftkanalverbindungssystem nach Anspruch 3, **dadurch gekennzeichnet, dass** die Einstecköffnung (44) der Einsteckkammer (38) zur Innenseite der Einsteckkammer (38) hin durch den V-förmigen Schenkel (42) verengt ist.

5. Luftkanalverbindungssystem nach einem der vorhergehende Ansprüche, **dadurch gekennzeichnet, dass** in der Einstecktasche (32) eine Kleb-/Dichtstoffmasse (34) eingebracht ist, die aus einem ein- oder mehrkomponentigen Kunststoff besteht.

6. Luftkanalverbindungssystem nach Anspruch 1, **dadurch gekennzeichnet, dass** der Profilabschnitt (56) als Dichtprofilkörper (58) eine Rastnase (58) oder eine Hinterschneidung aufweist, welche in die Einsteckkammer (38) des Flanschprofils (12) eingreift.

7. Luftkanalverbindungssystem nach Anspruch 1, **dadurch gekennzeichnet, dass** der streifenförmige Abschnitt (53) des Dichtprofilkörpers (52) als Hohlkörper, Profilkörper oder als Vollkörper, insbesondere quadratisch- oder rechteckförmiger Vollkörper, ausgebildet ist.

8. Luftkanalverbindungssystem nach Anspruch 1, **dadurch gekennzeichnet, dass** der Dichtprofilkörper (52) aus einem Kunststoffteil, insbesondere Kunststoffspritzgussteil, besteht, wobei eine erste Komponente, welche den Profilabschnitt (56) aus einem steiferen Kunststoffmaterial besteht als die zweite Komponente, welche den streifenförmigen Abschnitt (53) bildet.

9. Luftkanalverbindungssystem nach Anspruch 1, **dadurch gekennzeichnet, dass** die erste Komponente des Dichtprofilkörpers (52) aus einem ungeschäumten Kunststoff und die zweite Komponente aus einem geschäumten Kunststoff besteht.

10. Luftkanalverbindungssystem nach Anspruch 9, **dadurch gekennzeichnet, dass** die Anlagefläche (54) des streifenförmigen Abschnitts (53) vom Dichtprofil (51) eine Klebstoffbeschichtung aufweist.

11. Luftkanalverbindungssystem nach Anspruch 1, **dadurch gekennzeichnet, dass** das Dichtprofil (51) als eine geschlossene umlaufende Dichtung ausgebildet ist, welche im Querschnitt auf einen Anschlussquerschnitt von zwei miteinander zu verbindenden Luftkanalelementen (11) angepasst ist.

12. Luftkanalverbindungssystem nach Anspruch 1, **dadurch gekennzeichnet, dass** das Dichtprofil (51) als endloses Band ausgebildet ist, welches vorzugsweise auf einer Rolle bevorratet ist.

13. Luftkanalverbindungssystem nach Anspruch 1, **dadurch gekennzeichnet, dass** das Dichtprofil (51) aus einem thermoplastischen Elastomer oder aus einer Kombination von thermoplastischen Elastomeren, insbesondere aus EPDM, Kautschuk, PE, PVC oder Neopren, ausgebildet ist.

## Claims

1. An air duct connection system for connecting two air duct elements (11) so as to form an air duct, having flange profiles (12) which comprise a first chamber (21) formed by profile legs (22, 23) and mountable onto the end of the air duct element (11) and a second chamber (27) formed by further profile legs (28, 29) which is disposed at an angle with respect to the first chamber (21), said second chamber (27) being designed for receiving a leg of a corner bracket (14), the first profile leg (22) of the first chamber (21) and the first profile leg (28) of the second chamber (27) being oriented such as to form an L and the first profile leg (28) of the second chamber (27) having a backward-folded lug (31) which is oriented essentially parallel to the first profile leg (22) of the first chamber (21) and forms an insertion pocket (32) for receiving the end of the air duct element (11) and the first profile leg (22) of the first chamber (21) comprising a backward-bent portion (35) that extends outside of the first chamber (21), and an insertion chamber (38) being formed which is provided adjacent to, and outside of, the first chamber (21) in the prolongation of the backward-bent portion (35), and a fold (48) of the backward-folded lug (31) extending up to the transition portion (49) between the second profile leg (29) of the second chamber (27) and the second profile leg (23) of the first chamber (21), with two adjacent flange profiles (12) being connected to each other in the corner region of the air duct element (11) by a corner bracket (14) and the respective leg of the corner bracket (14) being inserted into the second chamber (27) of the flange profile (12) and the one end of the air duct element (11) being inserted into the insertion pocket (32) of the flange profile (12), **characterised in that** a sealing profile (51) with a sealing profile body (52) has an L-shaped cross-section and has a strip-shaped portion (53) with a contact surface (54) for an outer side of the first leg (28) of the second chamber (27) of a flange profile (12) and comprises a profile portion (56) that is insertable into the insertion chamber (38) of the flange profile, and **in that** the sealing profile (51) may be slid onto the flange profile(s) (12) of the air duct element (11) so as to extend along the flange profiles (12) and the corner regions (62) thus sealing the connection point (16) between the respective end faces of two air duct elements (11).

2. The air duct connection system as claimed in claim 1, **characterised in that** the insertion chamber (38) of the flange profile (12) is disposed adjacent to, and outside of, the insertion pocket (32).

3. The air duct connection system as claimed in claim 1 or 2, **characterised in that** the insertion chamber (38) of the backward-bent portion (35) has an insertion opening (44) formed on the opposite side by a V-shaped leg (42) pointing towards an interior of said insertion chamber (38).

4. The air duct connection system as claimed in claim 3, **characterised in that** the insertion opening (44) of the insertion chamber (38) has a narrowing formed by the V-shaped leg (42) and leading towards the interior of the insertion chamber (38).

5. The air duct connection system as claimed in any of the preceding claims, **characterised in that** the insertion pocket (32) has an adhesive/sealing compound (34) inserted therein which consists of a one-component or multi-component plastic material.

6. The air duct connection system as claimed in claim 1, **characterised in that** the profile portion (56), which serves as a sealing profile body (58), has a snap-on nose (58) or an undercut engaging with the insertion chamber (38) of the flange profile (12).

7. The air duct connection system as claimed in claim 1, **characterised in that** the strip-shaped portion (53) of the sealing profile body (52) is realised as a hollow body, a profile body, or a solid body, in particular a square-shaped or rectangular solid body.

8. The air duct connection system as claimed in claim 1, **characterised in that** the sealing profile body (52) consists of a plastic part, in particular a plastic injection-moulded part, with a first component, which forms the profile portion (56), consisting of a stiffer plastic material than the second component, which forms the strip-shaped portion (53).

9. The air duct connection system as claimed in claim 1, **characterised in that** the first component of the sealing profile body (52) consists of an unfoamed plastic material and the second component consists of a foamed plastic material.

10. The air duct connection system as claimed in claim 9, **characterised in that** the contact surface (54) of the strip-shaped portion (53) of the sealing profile (51) has an adhesive coating.

11. The air duct connection system as claimed in claim 1, **characterised in that** the sealing profile (51) is formed as a closed, circumferential seal which is adapted, as to its cross-section, to a connection cross-section of two air duct elements (11) that are to be joined together.

12. The air duct connection system as claimed in claim 1, **characterised in that** the sealing profile (51) is formed as an endless band which is preferably held in store on a roll.

13. The air duct connection system as claimed in claim 1, **characterised in that** the sealing profile (51) is formed of a thermoplastic elastomer, or of a combination of thermoplastic elastomers, in particular of EPDM, rubber, PE, PVC or neoprene.

## Revendications

1. Système de raccordement de conduits d'air destiné à relier deux éléments de conduit d'air (11) en vue de former un conduit d'air, pourvu de profilés de bride (12) qui comprennent une première chambre (21) formée par des branches profilées (22, 23) et pouvant être glissée sur l'extrémité de l'élément de conduit d'air (11) et une deuxième chambre (27) formée par d'autres branches profilées (28, 29) et disposée de manière angulaire par rapport à la première chambre (21), et la deuxième chambre (27) étant prévue pour recevoir une branche d'un angle de coin (14), la première branche profilée (22) de la première chambre (21) et la première branche profilée (28) de la deuxième chambre (27) étant orientées en L l'une par rapport à l'autre et la première branche profilée (28) de la deuxième chambre (27) présentant un nez de pliage (31) qui est orienté essentiellement de manière parallèle à la première branche profilée (22) de la première chambre (21) et forme une poche d'emboîtement (32) destinée à recevoir l'extrémité de l'élément de conduit d'air (11), et la première branche profilée (22) de la première chambre (21) comprenant un coudage (35) qui s'étend à l'extérieur de la première chambre (21), et une chambre d'emboîtement (38) étant formée, laquelle est prévue à l'extérieur de la première chambre (21), et ce de manière contiguë à celle-ci, et laquelle succède au coudage (35), et un pli (48) du nez de pliage (31) s'étendant jusqu'à la partie de transition (49) entre la deuxième branche profilée (29) de la deuxième chambre (27) et la deuxième branche profilée (23) de la première chambre (21), deux profilés de bride (12) voisins étant assemblés l'un à l'autre dans la zone de coin de l'élément de conduit d'air (11) par un angle de coin (14), et la branche respective de l'angle de coin (14) étant insérée dans la deuxième chambre (27) du profilé de bride (12) et l'élément de conduit d'air (11) étant inséré par ladite une extrémité dans la poche d'emboîtement (32) du profilé de bride (12), **caractérisé en ce qu'**un profilé d'étanchéité (51) avec un corps de profilé d'étanchéité (52) a une section transversale en forme de L et présente une partie (53) en forme de bande pourvue d'une surface de contact (54) pour une face extérieure de la première branche (28) de la deuxième chambre (27) d'un profilé de bride (12) et comprend une partie profilée (56) qui peut être insérée dans la chambre d'emboîtement (38) du profilé de bride, et **en ce que** le profilé d'étanchéité (51) peut être inséré sur le ou les profilés de bride (12) de l'élément de conduit d'air (11) et s'étend le long des profilés de bride (12) et des zones de coin (62) et rend ainsi étanche un point de raccordement (16) côté frontal entre deux éléments de conduit d'air (11).

2. Système de raccordement de conduits d'air selon la revendication 1, **caractérisé en ce que** la chambre d'emboîtement (38) du profilé de bride (12) est disposée à l'extérieur de la poche d'emboîtement (32), et ce de manière contiguë à celle-ci.

3. Système de raccordement de conduits d'air selon la revendication 1 ou 2, **caractérisé en ce que** la chambre d'emboîtement (38) présente, à l'opposé du coudage (35), une ouverture d'emboîtement (44) qui est formée par une branche (42) en forme de V qui est orientée vers un espace intérieur de la chambre d'emboîtement (38).

4. Système de raccordement de conduits d'air selon la revendication 3, **caractérisé en ce que** l'ouverture d'emboîtement (44) de la chambre d'emboîtement (38) se trouve rétrécie vers le côté intérieur de la chambre d'emboîtement (38) par la branche (42) en forme de V.

5. Système de raccordement de conduits d'air selon l'une quelconque des revendications précédentes, **caractérisé en ce que** dans la poche d'emboîtement (32) est introduite une masse adhésive/d'étanchéité (34) qui est constituée en une matière plastique à un ou plusieurs composants.

6. Système de raccordement de conduits d'air selon la revendication 1, **caractérisé en ce que** la partie profilée (56) présente en tant que corps de profilé d'étanchéité (58) un ergot d'arrêt (58) ou une contre-dépouille qui entre en prise avec la chambre d'emboîtement (38) du profilé de bride (12).

7. Système de raccordement de conduits d'air selon la revendication 1, **caractérisé en ce que** la partie (53) en forme de bande du corps de profilé d'étanchéité (52) est formée en tant que corps creux, corps profilé ou en tant que corps plein, en particulier en tant que corps plein de forme carré ou rectangulaire.

8. Système de raccordement de conduits d'air selon la revendication 1, **caractérisé en ce que** le corps de profilé d'étanchéité (52) est constitué par un élément en matière plastique, en particulier un élément en matière plastique moulé par injection, un premier composant qui forme la partie profilée (56) étant constitué en une matière plastique plus rigide que le deuxième composant qui forme la partie (53) en forme de bande.

9. Système de raccordement de conduits d'air selon la revendication 1, **caractérisé en ce que** le premier composant du corps de profilé d'étanchéité (52) est constitué en une matière plastique non expansée et que le deuxième composant est constitué en une matière plastique expansée.

10. Système de raccordement de conduits d'air selon la revendication 9, **caractérisé en ce que** la surface de contact (54) de la partie (53) en forme de bande du profilé d'étanchéité (51) présente un revêtement adhésif.

11. Système de raccordement de conduits d'air selon la revendication 1, **caractérisé en ce que** le profilé d'étanchéité (51) est formé en tant que joint d'étanchéité circonférentiel fermé dont la section transversale est adaptée à une section transversale de raccordement de deux éléments de conduit d'air (11) à relier.

12. Système de raccordement de conduits d'air selon la revendication 1, **caractérisé en ce que** le profilé d'étanchéité (51) est formé en tant que bande sans fin qui est de préférence stockée sur un rouleau.

13. Système de raccordement de conduits d'air selon la revendication 1, **caractérisé en ce que** le profilé d'étanchéité (51) est formé en un élastomère thermoplastique ou en une combinaison d'élastomères thermoplastiques, en particulier en EPDM, caoutchouc, PE, PVC ou en néoprène.
